Europäisches Patentamt

European Patent Office

Office européen des brevets

(19)

(11) Veröffentlichungsnummer: **0 346 820**

**A1**

(12) # EUROPÄISCHE PATENTANMELDUNG

(21) Anmeldenummer: **89110660.1**

(22) Anmeldetag: **13.06.89**

(51) Int. Cl.⁴: **F24J 2/24**

(30) Priorität: **17.06.88 IT 483688**

(43) Veröffentlichungstag der Anmeldung:
**20.12.89 Patentblatt 89/51**

(84) Benannte Vertragsstaaten:
**AT CH DE FR LI**

(71) Anmelder: **Wallnöfer, Heinrich Franz**
**Zona Artigianale**
**I-39026 Prato allo Stelvio (BZ)(IT)**

(72) Erfinder: **Wallnöfer, Heinrich Franz**
**Zona Artigianale**
**I-39026 Prato allo Stelvio (BZ)(IT)**

(74) Vertreter: **Fuhlendorf, Jörn, Dipl.-Ing.**
**Patentanwälte Dreiss, Hosenthien &**
**Fuhlendorf Gerokstrasse 6**
**D-7000 Stuttgart 1(DE)**

(54) **Sonnenkollektor zur Heizung von Flüssigkeiten.**

(57) Beschrieben wird ein Sonnenkollektor zur Heizung von Flüssigkeiten, insbesondere zur Heizung von Brauchwasser, von Schwimmbadwasser, von Räumen, bestehend aus einem Gehäuse, einem im Gehäuse aufgenommenen Tragrahmen mit Zwischenschaltung von Wärmedämmaterial an den Seitenwänden und am Gehäuseboden, einer Vielzahl von zueinander parallel angeordneten Kanälen in einer zum Gehäuseboden parallelen Ebene, die an ihren beiden Enden mit jeweils einem Sammelrohr verbunden sind, und einer transparenten Abdeckung, die oben das Gehäuse abschließt. Erfindungsgemäß weist jeder Wärmetransportkanal (2; 9; 18; 25;) eine Querschnittsform mit einer Durchflußweite (7) auf, die sich von den den nächstliegenden Kanälen anliegenden Seiten (3, 4; 10, 11; 19, 20;) des Kanals (2; 9; 18; 25;) in Richtung der Mitte des Querschnittes derart erweitert, daß in Richtung zur transparenten Abdeckung (44) ein wellenförmiges Profil gebildet wird, sodaß eine Vielzahl von Kanälen (2; 9; 18; 25;) eine gewellte Oberfläche mit Wellentälern im Bereich der gegenseitigen Ausrichtung der einzelnen Kanäle (2; 9; 18; 25;) und mit Wellenkämmen in der Mitte der einzelnen Kanäle gebildet wird, wobei das gewellte, oben liegende Profil der Kanäle mit Abstand von der transparenten Abdeckung (44) angeordnet ist, während die Basis des gewellten Profils mit Abstand vom Gehäuseboden angeordnet ist.

FIG.7

## SONNENKOLLEKTOR ZUR HEIZUNG VON FLÜSSIGKEITEN

Die vorliegende Erfindung bezieht sich auf einen Sonnenkollektor zur Heizung von Fluiden, insbesondere zur unmittelbaren oder mittelbaren Heizung von Flüssigkeiten, wie beispielsweise Brauchwasser, Kochwasser, Schwimmbadwasser, von Räumen und Wohnungen.

Es sind Sonnenkollektoren bekannt, bei denen sogenannte Absorberbänder aus in den meisten Fällen sehr dünnem Rollaluminiumblech verwendet werden wie sie auch bei Kühlschränken als Kühlkanäle ausgeführt werden. In diesem Fall ist die Qualität des sehr dünnen Aluminiumbleches fertigungsbedingt sehr problematisch, da Korrosionsgefahr und Fehleranfälligkeit besteht. Sicherere Bleche mit größerer Wandstärke lassen sich hingegen nicht auf die gewünschte Weise verformen. Bei den Aluminiumblechen ist überdies Porositätsgefahr zu befürchten. Die die zu erwärmende Flüssigkeit leitenden Kanäle in diesem Absorbervorrichtungen sind überdies, weiterhin herstellungs- und druckbedingt, verhältnismäßig eng und die Leerzwischenräume zwischen den Kanälen sind verhältnismäßig groß. Das Verhältnis liegt bei etwa 1:4. Auf diese Weise ist die Einfallfläche der Sonnenstrahlen auf das Volumen des zu erhitzenden Mittels, bei Betrachtung der gesamten Oberfläche, verhältnismäßig klein und dementsprechend klein ist auch die Heizwirkung. Es sind auch Sonnenkollektoren mit Vorrichtungen aus stranggepresstem Aluminium mit glatter, ebener Oberfläche bekannt. In diesem Falle, immer herstellungs- und materialbedingt, sind die Wandstärken verhältnismäßig groß und dementsprechend langsam ist die Wärmeleitung. Da die horizontalen Sammelrohrleitungen wegen der Herstellung nicht fugenlos im Bereich des Ein-und Austrittes der vertikalen Heizkanäle austauschbar sind, müssen sie verschweißt werden, was beim Aluminium nicht unbedeutende Probleme darstellt. Sie müssen geradezu absolut dicht sein und einem Druck von mindestens 3 bar widerstehen. Überdies ist beim Aluminium die erwähnte Porositätsgefahr problematisch. Bei der ebenen Absorberfläche fallen die Sonnenstrahlen beim Übergang der Sonne in ihrer Laufbahn von Horizont zu Horizont nur in der Mittagszeit nahezu senkrecht auf die Oberfläche der Kanäle ein. Auf entsprechende Weise wird die Heizkraft beeinträchtigt.

Es sind auch Sonnenkollektoren mit sogenannten Kanalplattenabsorbern bekannt, bei denen zwei Gütebleche nach der Radiatorenart übereinandergelegt und miteinander im Randbereich dicht verschweißt werden und bei denen an der Innenfläche von unten nach oben eine Punktschweißung derart ausgeführt wird, daß nach Aufpressen der Zwischenräume von unten nach oben verlaufende Kanäle entstehen, die von Schweißpunktreihe zu Schweißpunktreihe leicht aufgewölbt werden und unten und oben in einen Quersammelkanal münden. Die so verformten Kanäle weisen eine große und ideal verlaufende Berührungsfläche für die einfallenden Sonnenstrahlen auf. Der große Nachteil bei diesem Absorbern liegt darin, daß die Gütebleche nach Radiatorenart nicht korrosionsfrei sind und daß die große Anzahl von Schweißpunktnähten nicht immer zuverlässig halten. Dies gilt auch für rostfreie Bleche.

Bekannt sind schließlich auch Sonnenkollektoren, die aus kreisrunden Kupferrohren bestehen, bei denen entweder ein Rohr schlangenlinienförmig sich von unten nach oben erstreckt und auf einer dunklen Metallplatte als Hintergrund befestigt ist oder von unten nach oben laufende kreisrunde Rohre an ihren Enden in horizontale, untere und obere Sammelrohre münden. Auch dieses so gebildete Rohrregister ist auf einer dunklen Metallplatte befestigt. Diese Kupferrohrabsorber sind korrosions- und druckbeständig und das Kupfer ist sehr wärmeleitfähig. Der große Nachteil liegt aber in der Rohrform, wobei die Sonnenstrahlen nur einen schmalen Streifen der Rohroberfläche senkrecht bescheinen, während sie hingegen im übrigen Bereich reflektiert werden und die um 180° gedrehte Rückseite überhaupt nicht treffen. Der senkrecht beschienene Rohrstreifen entspricht innen dem Kreissegment mit dem kleinsten Heizmittelvolumen. Entsprechend dieser verhältnismäßig kleinen Sonnenstrahleneinfallfläche ist die Heizleistung sehr gering.

Die Aufgabe der vorliegenden Erfindung besteht in der Schaffung eines Absorbers aus einem Material mit bestmöglicher Wärmeleitfähigkeit, hergestellt aus fertigen erfahrungsgemäß absolut dichten Rohrprofilen, die möglichst nicht geschweißt oder punktgeschweißt werden müssen, und bei dem die Rohrprofile nicht kreisrund, sondern derart geformt sind, daß eine möglichst große Sonnenstrahlenberührungsfläche auf das darin sich befindliche Heizmittelvolumen entsteht, und bei dem zwischen den Heizmittelkanälen eine bestimmte, jedoch verhältnismäßig kleine Wärmespeicherruhefläche gehalten wird.

Die Aufgabe wird erfindungsgemäß durch die Ausführung eines Absorbers gelöst, dadurch gekennzeichnet, daß jeder Absorberkanal eine Querschnittsform mit einer Durchflußweite aufweist, die sich von den dem nächstliegenden Kanal anliegenden Seiten in Richtung der Mitte des Querschnittes derart erweitert, daß, in Richtung einer transparenten Abdeckung, ein wellenförmiges Profil gebildet wird, sodaß eine Vielzahl von Kanälen eine gewellte Oberfläche mit Wellentälern im Bereich der gegenseitigen Ausrichtung der einzelnen Kanäle und mit Wellenkämmen in der Mitte der einzelnen Kanäle gebildet werden, wobei das gewellte Profil mit Abstand von der transparenten Abdeckung angeordnet ist, während die Basis des gewellten Profils mit Abstand vom Gehäuseboden angeordnet ist.

In einer bevorzugten Ausführungsform besteht der Absorber erfindungsgemäß aus parallel zueinander angeordneten, von unten nach oben sich erstreckenden Kupferrohren, deren kreisrunde Profile durch Pressverfahren so gepreßt wurden, daß die an zwei gegenüberliegenden Längsseiten ihres Umfanges zusammengequetscht enden und in der Umfangsmitte leicht aufgewölbt sind, wobei die obere, den Lichtstrahlen ausgesetzte Seite derart gegenüber der unteren, dem Schatten ausgesetzte Seite ausgebaucht ist, daß zwischen der oberen und der unteren Seite sich eine flache Durchflußweite als Heizmittelkanal ergibt.

Die untere Wand an der dem Schatten ausgesetzten Seite könnte auch eben ausgebildet sein, sie ist jedoch stärker und formbeständiger gegen den Heizmitteldruck von innen, wenn sie ebenfalls leicht nach oben gewölbt ist. Die so geformten Kupferrohrprofile liegen seitlich mit ihren zusammengepressten Enden und längs ihren ganzen Längen eng aneinander und bilden so zwischen den Heizmittelkanälen die gewünschten Wärmespeicherstreifenflächen. Der Querschnitt eines Absorbers mit diesen wie beschrieben geformten Rohrprofilen ist mit einer Welle oder einem Bogen mit Wellenkamm und Wellental vergleichbar.

Weitere Merkmale und Einzelheiten des erfindungsgemäßen Sonnenkollektors ergeben sich aus der folgenden Beschreibung von erfindungsgemäßen Ausführungsformen, die in der Zeichnung dargestellt sind. In der Zeichnung zeigen

Figur 1 einen Querschnitt durch ein kreisrundes Kupferrohr, von dem die Formung eines Heizmittelkanals ausgegangen wird,

Figur 2 einen Querschnitt durch ein Presskupferrohr als Heizmittelkanal,

Figur 3 einen Querschnitt eines Heizmittelkanals in einer zweiten Ausführungsform,

Figur 4 einen Querschnitt durch einen Heizmittelkanal in einer dritten Ausführungsform,

Figur 5 einen Querschnitt durch einen Heizmittelkanal in einer vierten Ausführungsform,

Figur 6 eine Draufsicht auf einen Sonnenkollektor, und

Figur 7 einen Teilquerschnitt durch die Gesamtheit eines Sonnenkollektors, der gemäß Figur 2 ausgeführte Kanäle umfaßt.

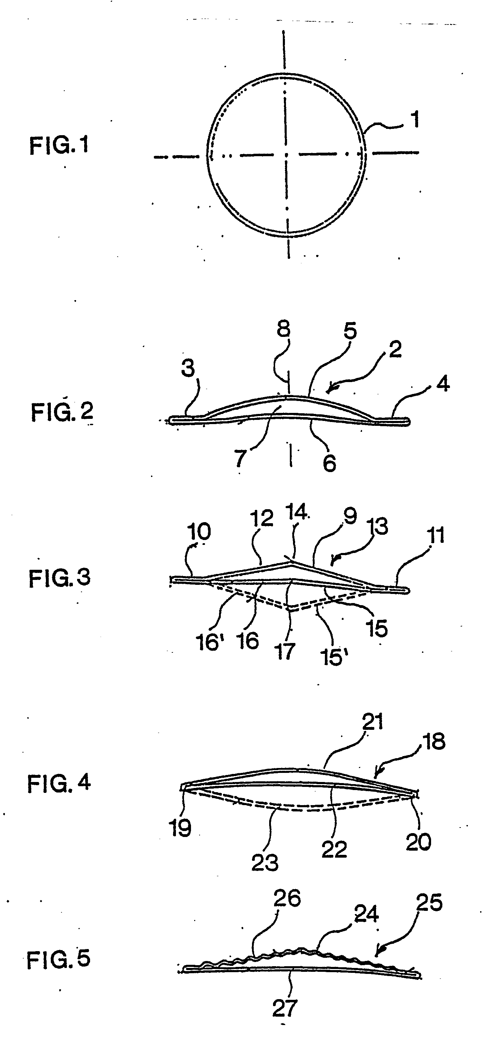

Wie in Figur 1 gezeigt, kann zur Herstellung eines erfindungsgemäßen Kanals von einem kreisrunden Kupferrohr ausgegangen werden. Durch ein zweckmäßiges Pressverfahren wird das kreisrunde Profil in eines der Profile mit einem Querschnitt, wie in den Figuren von 2 bis 5 dargestellt, umgeformt.

In Figur 2 weist das Querschnittprofil eines Kanals 2 zwei seitliche Quetschbereiche 3 und 4, eine obere, mittige Wölbung 5 und eine untere Basis 6 auf, die vorzugsweise, jedoch nicht zwingend, mit größerem Krümmungsradius gebogen ist, als jener der Wölbung 5, derart, daß zwischen der Basis 6 und der Wölbung 5 eine im wesentlichen als Kreissektor ausgebildete lichte Weite 7 gebildet wird, die zu einer Mittelachse 8 symmetrisch ist. Dabei bilden die seitlichen Quetschbereiche 3 und 4 Wellentäler, während die Mitte der Wölbung 8 den Wellenkamm bildet. Die Basis 6 kann klarerweise auch eben ausgebildet sein, die ihr eingedrückte Konvexität trägt jedoch zu einer größeren mechanischen Festigkeit des Kanals selbst bei.

In Figur 3 ist eine weitere Ausführungsmöglichkeit eines Kanals 9 dargestellt, bei dem zwischen seitlichen Quetschbereichen 10 und 11 sich oben eine Wand erstreckt, die durch zwei gleiche Schenkel 12 und 13 gebildet wird, die in einem Wellenkamm 14 enden. Die untere Wand des Rohrprofils kann zwei Schenkel 15 und 16 aufweisen, die in einem Scheitel 17 enden, sodaß mit den Schenkeln 12 und 13 im wesentlichen eine zirkelförmige Durchflußweite gebildet wird. Wahlweise können Schenkel 15' und 16' derart nach unten gerichtet sein, daß sie zusammen mit den Schenkeln 12 und 13 im wesentlichen einen rhombischen Durchflußquerschnitt bilden. Wahlweise kann die untere Basis auch eben oder nach unten oder nach oben gewölbt sein, im letzteren Fall wie beispielsweise in Figur 2.

Wie in Figur 4 dargestellt, sind, mit Unterschied zu der Figur 2, seitliche Quetschbereiche 19 und 20 im wesentlichen nach dem Krümmungsradius des Oberprofils 21 bzw. des Unterprofils 22 zusammengepresst, sodaß seitlich breite Wärmespeicherstreifen entstehen. Wechselweise könnte die Basis natürlich auch mit einer Wölbung 23, wie in Figur 4 strichliert dargestellt, ausgebildet sein.

In Figur 5 weist die obere Wand 24 eines Rohrprofils 25 nicht mehr eine glatte Oberfläche auf, sonderen eine Oberfläche mit einer Vielzahl von Längsstufen oder -sicken 26 um weiterhin die Lichtstrahlenberührungsfläche zu vergrößern, wobei die Lichtstrahlen so stärker absorbiert werden können. Dabei ist auch die Basis 27 leicht zur stufenförmigen, oberen Wand 25 gewölbt. Es liegt nahe, daß die Basis 27 auch eine beliebige Ausbildung wie unter Bezugnahme auf die Figuren von 2 bis 4 beschrieben annehmen kann.

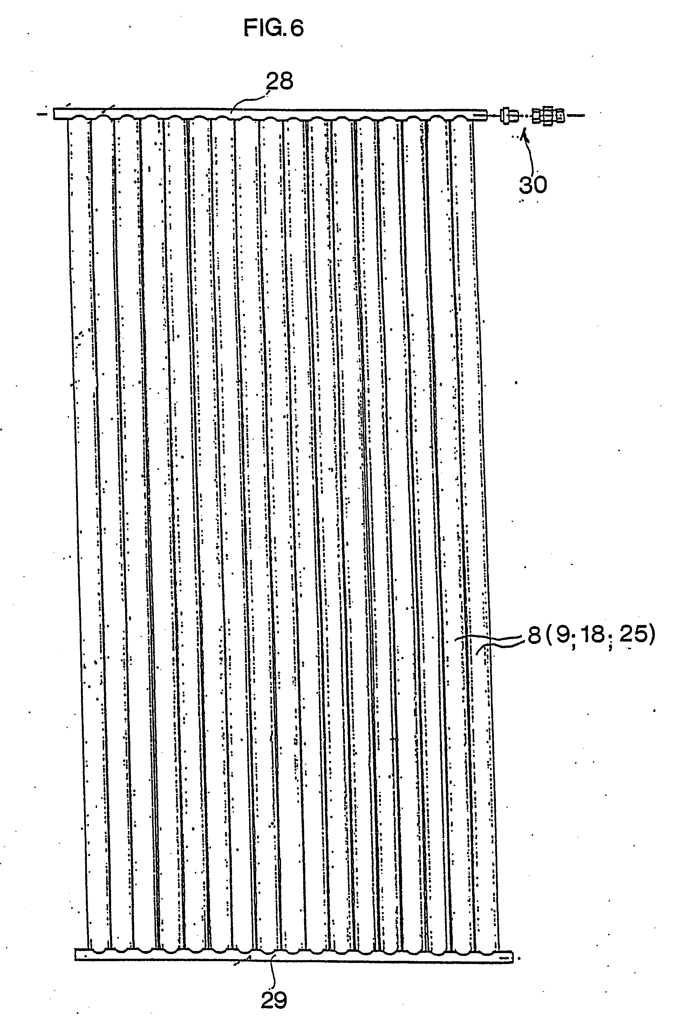

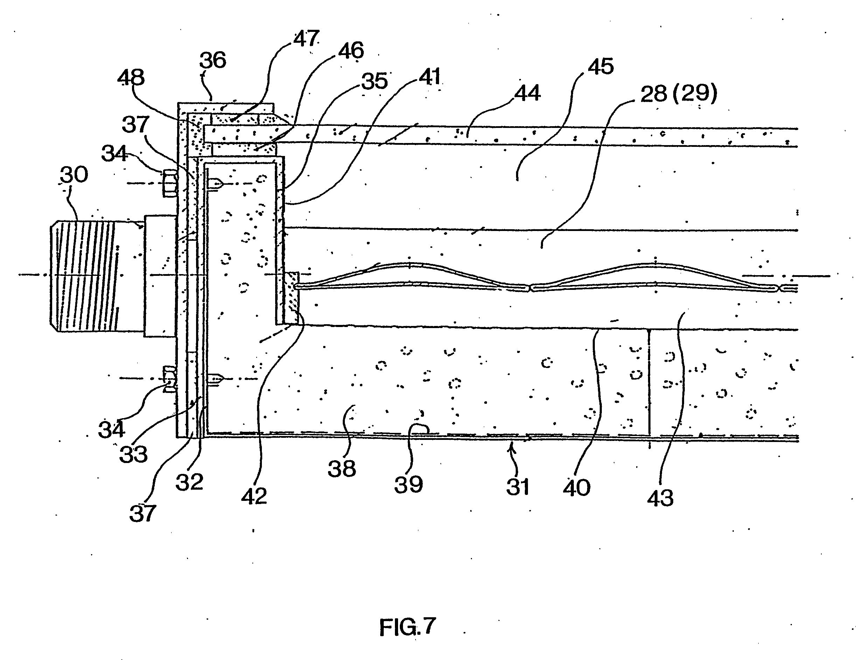

Unter Bezugnahme auf den Figuren 6 und 7, wird nachstehend eine Zusammenbaumöglichkeit der oben beschriebenen Kanäle erläutert, insbesondere der Kanäle 2. Wie aus Figur 6 hervorgeht, ist eine Vielzahl von Kanälen 8 bzw. 9, 18, 25 zueinander parallel angeordnet und an ihren freien Enden jeweils an einem mit ihnen kommunizierenden Sammelrohr 28 und 29 angelötet. Die Sammelrohre 28, 29 können eine kreisrundes oder ovales Profil aufwei sen. Jedes Sammelrohr 28, 29 ist überdies mit einer Schraubverbindung 30 bekannter Art versehen. Diese Schraubverbindungen 30 sind dazu bestimmt, den Sonnenkollektor mit den gewünschten Verbrauchern, wie z.B. mit einem Brauchwassernetz, einer Heizung usw. zu verbinden. Es ist hervorzuheben, daß die Vielzahl von zu erwärmende Flüssigkeiten leitenden Kanäle eine feste Einheit bilden, die beispielsweise in ein wie nachstehend unter Bezugnahme auf die Figur 7 beschriebenes Gehäuse eingebracht werden kann.

Das Gehäuse umfaßt eine oben offene Wanne 31, deren Seitenwände 32 im Bereich ihrer oberen Ränder von einem Rahmen 33 übergriffen werden, der derart in der Form eines umgekehrten U gebogen ist, daß dessen Außenschenkel außen mittels Schrauben 34 an den Seitenwänden 32 befestigt werden kann und dessen Innenschenkel 35 mit Abstand von den Seitenwänden 32 ins Innere der Wanne 31 ragt. Der Innenschenkel 35 endet mit Abstand vom Boden der Wanne 31. Am Außenschenkel des Rahmens 33 sind überdies mittels derselben Schrauben 34 unter Zwischenschaltung von aus wärmedämmendem Material bestehenden Zwischenlagen 37 Winkelstücke 36 befestigt.

Der Raum zwischen den beiden Schenkeln des Rahmens 32 und jener zwischen dem oberen Ende des Innenschenkels 35 und dem Boden der Wanne 31 sind mit einem wärmedämmenden Material 38 wie beispielsweise Hartschaumstoff oder Steinwolle gefüllt. Die Seitenwände 32 und der Boden der Wanne 31 sind mit einer Schicht 39 aus wärmereflektierendem Material verkleidet oder sie können selbst aus diesem Material bestehen. So ist auch die freiliegende Oberfläche des Materials 38 und jene außenliegende des Innenschenkels 35 mit Folien 40 bzw. 41 aus einem wärmereflektierenden Material verkleidet. In diesem letzteren Fall kann der Rahmen selbst aus diesem Material bestehen.

Die Wanne 31 ist zweckmäßigerweise mit Durchbrüchen versehen, die in den Seitenwänden 32 ausgenommen und nicht dargestellt sind, die dazu bestimmt sind, die vier Endbereiche der Sammelrohre 28, 29 in Figur 6 aufzunehmen, von denen zwei an diametral entgegengesetzten Seiten des Kollektors mit Anschlüssen 30 für den Eintritt und den Austritt des zu erwärmenden bzw. erwärmten Fluids versehen sind. Der Sonnenkollektor ist so unter Auflage an vier Stellen im Gehäuse unter Zwischenschaltung von Distanzstücken 42 zwischen den Rändern der Außenkanäle 2 und der Außenfläche des Innenschenkels 35 untergebracht. Die oben erwähnten Durchbrüche befinden sich mit Abstand vom Boden der Wanne 31, derart, daß zwischen der unteren Basis und der Oberfläche 40 ein wärmedämmender Luftspalt 43 gebildet wird.

Zwischen der oberen Traverse des Rahmen 32 und dem auskragendem Schenkel der Winkelstücke 36 ist eine Einrahmung 48 einer Abdeckung 44 aus Glas oder einem anderen, transparenten Material wie z.B. Polykarbonat derart verspannt, daß ein Luftzwischenspalt zwischen der Abdeckung 44 und der Absorberfläche des Sonnenkollektors gebildet wird. Zwischen dem freien, umlaufenden Bereich der Abdeckung 44 und der Traverse der Winkelstücke 36 ist ein Auflager 46 aus einem hitzebeständigem Schaumstoff eingebracht, während zwischen demselben umlaufenden Bereich und dem auskragenden Schenkel der Winkelstücke 36 in der Nähe der Einrahmung 48 eine wasserdichte, umlaufende Dichtung 47, vorzugsweise aus Asphaltsilikon, angeordnet ist. Zweckmäßigerweise sind die Verkleidungsschichten im Bereich der Mitten der Sammelrohre leicht unterbrochen, sodaß der Eintritt von genügend Außenluft erlaubt wird, um die Bildung von Kondenswasser in den Zwischenräumen des Sonnenkollektors zu verhindern.

Die Installation mit dem bevorzugten Standort des erfindungsgemäßen Sonnenkollektors und die Betriebsweise desselben sind wie folgt:

Der Sonnenkollektor wird möglichst mit seiner Absorberfläche nach Süden, Süd-Ost oder Süd-West ausgerichtet und in Abhängigkeit der Neigung eines Hausdaches zwischen 25° und 60° geneigt. Bei den beschriebenen gewölbten Warmflüssigkeit-Leitkanälen, die sich von unten nach oben erstrecken, fallen die Sonnenstrahlen im Verlauf des langen Vormittags annäherungsweise in zu einer der Seiten des gewellten Profils des Kanals senkrechten Richtung ein, im Verlaufe des kurzen Mittags auf den Wellenkamm des gewellten Profils und im Verlaufe des langen Nachmittags auf die andere Seite des gewellten Profils. Die zur Absorberfläche senkrechte Sonneneinstrahlung beträgt die höchste Heizleistung des Sonnenkollektors. Wegen der engen lichten Weite oder der kleinen Höhe des Flüssigkeitsdurchflusses in den einzelnen Kanälen und der verhältnismäßig kleinen Breite wie auch der guten Wärmeleitfähigkeit des Materials wie Kupfer wird auch die Flüssigkeit als Wärmevehikel an der entsprechenden dem Schatten ausgesetzten Seite des Kanals erwärmt. Zur Mittagszeit ist die Sonne stärker, die lichte Weite des Kanals im Bereich des Wellenkammes des Profils dicker bzw. höher, daher das Volumen mit größerer Dicke und die zum Wellenkamm des gewellten Profils senkrechte Einstrahlung wird durch die zum wärmespeichernden Streifen des Wellentals des gewellten Profils senkrechte Einstrahlung unterstützt. Die so gebildete Absorberfläche mit einem zu erwärmenden, dünnschichtig auf einer weiten Fläche verteilten Fluid in Verbindung mit einem Baumaterial hoher Wärmeaufnahmefähigkeit wie Kupfer stellt die größtmögliche Heizleistung sicher. Die fugenlose Herstellung schafft keine Probleme, die hohe Druckfestigkeit und die Abdichtung der Kupferprofile ermöglichen einen vernünftigen Herstellungspreis und dennoch eine lange Lebensdauer und eine entsprechende Garantie derselben für einen erfindungsgemäßig hergestellten Sonnenkollektor.

Bei installiertem Sonnenkollektor fließt das von den Sonnenstrahlen zu erwärmenden, von einer Leitung herkommende Wärmetransportvehikel in das untere Sammelrohr 29 und von dort durch die wellen- bzw. bogenförmig ausgebildeten Absorberkanäle 2 bzw. 9, 18, 25 in Richtung des oberen Sammelrohrs 28 und dann in die Rückleitung zum Verbraucher zur Wärmeabgabe.

Zusammenfassend sind die Vorteile des erfindungsgemäßig hergestellten Sonnenkollektors im wesentlichen die folgenden:

1. Aufgrund der besonderen Ausbildung der einzelnen Kanäle für den Durchfluß des Wärmetransportveikels können auch Werkstoffe mit hoher Wärmeleitfähigkeit, mit schwieriger oder unmöglicher Schweißfähigkeit und mit hoher Absorptionsfähigkeit wie Kupfer verwendet werden, das schwierig schweißbar und bei herkömmlichen Sonnenkollektoren nicht oder mit wenig Erfolg verwendbar ist.

2. Bei stillstehender Flüssigkeit und beim Durchfluß derselben durch die Absorberkanäle wird die Sonnenkraft maximal ausgenutzt und daher wird die maximale Heizleistung erzielt, da das Volumen des Wärmetransportvehikels, d.h. das zu erwärmende Fluid im Absorberkanal auf eine größtmögliche Oberfläche verteilt wird und auf dieselbe die Sonnenstrahlen rechtwinklig einfallen.

3. Das absorbierende Material ist gegenüber seinem Gehäuse sowohl durch Dämmfüllmaterial als auch durch reflektierende Oberflächen bestmöglichst thermisch isoliert, sodaß Wärmedispersionen nach außen vermieden werden; der Sonnenkollektor liegt bloß an vier Stellen im Gehäuse auf, das heißt mittels der Endbereiche der Sammelrohre und ist mit außen nur durch die Anschlüsse verbunden: so ist die Dämmwirkung äußerst hoch, da die Wärmebrücken nach außen auf ein Mindestmaß reduziert sind. Es liegt nahe, daß der erfindungsgemäße Sonnenkollektor auch verschiedenartig ausgeführt und abgeändert werden kann, ohne den Schutzbereich der vorliegenden Erfindung zu verlassen:

So könnte das Profil der Kanäle auch durch Strangguß ausgeführt werden, das absorbierende Material könnte ein beliebiges mit einer guten Wärmeleitfähigkeit sein, die gewellten Kanäle könnten größere Abmessungen im Falle eines Schwerkraftbetriebes des Sonnenkollektors besitzen.

## Ansprüche

1. Sonnenkollektor zur Heizung von Flüssigkeiten, insbesondere zur Heizung von Brauchwasser, Kochwasser, Schwimmbadwasser, bestehend aus einem Gehäuse, einem im Gehäuse aufgenommenen Tragrahmen, einer Vielzahl von zueinander parallel angeordneten Kanälen in einer zum Gehäuseboden parallelen Ebene, die an ihren beiden Enden mit jeweils einem Sammelrohr verbunden sind, und einer transparenten Abdeckung, die oben das Gehäuse abschließt, dadurch gekennzeichnet, daß jeder Absorberkanal (2; 9; 18; 25;) eine Querschnittsform mit einer Durchflußweite (7) aufweist, die sich von den den nächstliegenden Kanälen anliegenden Seiten (3, 4; 10, 11; 19, 20;) des Kanals (2; 9; 18; 25;) in Richtung der Mitte des Querschnittes derart erweitert, daß in Richtung zur transparenten Abdeckung (44) ein wellenförmiges Profil gebildet wird, sodaß eine Vielzahl von Kanälen (2; 9; 18; 25;) eine gewellte Oberfläche mit Wellentälern im Bereich der gegenseitigen Ausrichtung der einzelnen Kanäle (2; 9; 18; 25;) und mit Wellenkämmen in der Mitte der einzelnen Kanäle gebildet wird, wobei das gewellte Profil mit Abstand von der transparenten Abdeckung (44) angeordnet ist, während die Basis des gewellten Profils mit Abstand vom Gehäuseboden angeordnet ist.

2. Sonnenkollektor nach Anspruch 1, dadurch gekennzeichnet, daß die Absorberkanäle (2; 9; 18; 25;) aus Rohren in einem Material mit hoher Wärmeleitfähigkeit bestehen, die sich von unten nach oben erstrecken, die derart zusammengepreßt sind, daß sie an zwei gegenüber liegenden Längsseiten ihres Umfanges zusammengequetscht enden, derart, daß sie mit anliegenden Absorberkanälen ausgerichtet werden können, und die im Bereich der Umfangsmitte leicht aufgewölbt sind, wobei die obere, den Lichtstrahlen ausgesetzte Seite gegenüber der unteren, dem Schatten ausgesetzte Seite ausgebaucht ist, derart, daß zwischen der oberen und der unteren Seite sich eine flache, breite Durchflußweite als Heizmittelkanal ergibt.

3. Sonnenkollektor nach Anspruch 1 und 2, dadurch gekennzeichnet, daß die den Sonnenstrahlen ausgesetzte Fläche der Absorberkanäle einen im wesentlichen dreieckigen Querschnitt aufweist (Figur 3), dessen Scheitel den Wellenkamm bildet.

4. Sonnenkollektor nach Anspruch 1 und 2, dadurch gekennzeichnet, daß die den Sonnenstrahlen ausgesetzte Wand der Absorberkanäle einen gewölbten Querschnitt aufweist, auf dem sich eine Vielzahl von Längssicken (Fig. 5) erstreckt.

5. Sonnenkollektor nach einem der vorstehenden Ansprüchen, dadurch gekennzeichnet, daß die dem Schatten ausgesetzte Basiswand des Profils eines jeden Absorberkanals eben ist.

6. Sonnenkollektor nach einem der Ansprüche von 1 bis 4, dadurch gekennzeichnet, daß die dem Schatten ausgesetzte Basiswand des Profils eines jeden Absorberkanals in Richtung der oben liegenden Wand mit einem Krümmungsradius gewölbt ist, der gegenüber jenem der oben liegenden Wand größer ist.

7. Sonnenkollektor nach einem der Ansprüche von 1 bis 4, dadurch gekennzeichnet, daß die dem Schatten ausgesetzte Basiswand des Profils eines jeden Absorberkanals in zur Wölbung der obenliegenden Wand entgegengesetzten Richtung gewölbt ist.

8. Sonnenkollektor nach einem der Ansprüche von 1 bis 4, dadurch gekennzeichnet, daß die dem Schatten ausgesetzte Basiswand des Profils eines jeden Absorberkanals einen im wesentlichen dreieckigen Querschnitt mit einem Scheitel aufweist, der in zum Wellenkamm der obenliegenden, gewellten Wand entgegengesetzter Richtung gerichtet ist.

9. Sonnenkollektor nach den vorstehenden Ansprüchen, dadurch gekennzeichnet, daß die Profile der einzelnen Absorberkanäle dadurch erhalten werden, daß von einem kreisrunden Rohr ausgegangen wird, das mittels eines Pressverfahrens zusammengepresst wird.

10. Sonnenkollektor nach den vorstehenden Ansprüchen, dadurch gekennzeichnet, daß die Profile der Absorberkanäle mittels eines Stranggußverfahrens erhalten werden.

11. Sonnenkollektor nach den vorstehenden Ansprüchen, dadurch gekennzeichnet, daß die Absorberkanäle in Kupfer ausgeführt sind.

12. Sonnenkollektor nach den vorstehenden Ansprüchen, dadurch gekennzeichnet, daß die Absorberkanäle aus rostfreiem Material oder ähnlichem bestehen, insbesondere für die direkte Heizung von z.B. Schwimmbadwasser.

FIG.1

FIG.2

FIG.3

FIG.4

FIG.5

## FIG.6

FIG.7

EP 0 346 820 A1

Europäisches
Patentamt

**EUROPÄISCHER RECHERCHENBERICHT**

Nummer der Anmeldung

EP 89 11 0660

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 508 593 (BRITISH PETROLEUM CO., LTD)<br>* Seite 2, Zeilen 45-73; Figuren 1,2 * | 1,5,10 | F 24 J 2/24 |
| A | --- | 2,3,8 | |
| X | US-A-4 144 874 (ZEBUHR)<br>* Spalte 3, Zeile 45 - Spalte 4, Zeile 5; Figur 5 * | 1,7,10 | |
| A | --- | 2,4 | |
| X | US-A-4 125 108 (PORTER et al.)<br>* Spalte 7, Zeilen 20-51; Spalte 8, Zeile 36 - Spalte 9, Zeile 24; Figuren 7-9 * | 1,11,12 | |
| Y | --- | 2,3,9 | |
| Y | US-A-1 979 859 (BROWN)<br>* Seite 2, Zeilen 61-101; Figuren 6-8 * | 2,3,9 | |
| A | DE-A-2 617 040 (HALLEINER ZENTRALHEIZUNGSBAU GmbH)<br>* Figur 7 *<br>--- | 1,6 | **RECHERCHIERTE SACHGEBIETE (Int. Cl.4)** |
| A | DE-A-2 755 161 (INDUSTRIE-WERKE KARLSRUHE AUGSBURG AG)<br>* Figur 5 *<br>--- | 1,8 | F 24 J<br>B 21 C<br>F 28 F |
| A | FR-A-1 485 515 (MASSON et al.)<br>* Figur 4 *<br>--- | 1,5 | |
| A | GB-A- 822 768 (N. ROBINSON et al.)<br>* Seite 2, Zeilen 40-86; Figuren 4-6 *<br>---       -/- | 1-3 | |

Der vorliegende Recherchenbericht wurde für alle Patentansprüche erstellt

| Recherchenort | Abschlußdatum der Recherche | Prüfer |
|---|---|---|
| DEN HAAG | 19-09-1989 | BELTZUNG F.C. |

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 8, Nr. 186 (M-320)[1623], 25. August 1984; & JP-A-59 77 256 (MATSUSHITA DENKI SANGYO K.K.) 02-05-1984 ----- | 1 | |

RECHERCHIERTE
SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 19-09-1989 | BELTZUNG F.C. |

EPO FORM 1503 03.82 (P0403)